# EUROPEAN PATENT APPLICATION

(11) **EP 4 498 093 A1**
(43) Date of publication of application: **29.01.2025**
(21) Application number: 24190991.0
(22) Date of filing: 25.07.2024
(51) Int. Cl.: G01P 3/488, F01D 21/00

(54) **SHROUDED TOOTHED WHEEL FOR AIRCRAFT ENGINE**

(30) Priority: 25.07.2023 US 202318358134
(71) Applicant: PRATT & WHITNEY CANADA CORP., Longueuil, Québec J4G 1A1 (CA)
(72) Inventor: DIOSADY, Laslo Tibor, (01BE5) Longueuil, J4G 1A1 (CA); NACCACHE, Gabriel, (01BE5) Longueuil, J4G 1A1 (CA)
(74) Representative: Dehns

(57) **Abstract**

A speed sensor (100) for a rotating component (32) in an aircraft engine (10) includes a phonic wheel (38; 138), mounted for rotation with the rotating component (32), including a disk body (60; 160) having a first axial face (61), a second axial face (63) axially spaced apart from the first axial face (61), a radial surface (62) extending axially between the first and second axial faces (61, 63) and extending circumferentially, and teeth (44) extending from the radial surface (62), the teeth (44) being circumferentially spaced apart by circumferential gaps (45) defined between the teeth (44). A shroud (70; 170) extends in a circumferential direction about the phonic wheel (38; 138). The shroud (70; 170) extends radially to obstruct the circumferential gaps (45) defined between the teeth (44) of the phonic wheel (38; 138) and the first and/or second axial faces (61, 63). A sensor (40) is mounted proximate to the phonic wheel (38; 138) to generate a sensor signal (50) when the teeth (44) of the phonic wheel (38; 138) pass the sensor (40) as the phonic wheel (38; 138) rotates.

## Description

### TECHNICAL FIELD

The disclosure relates generally to aircraft engines and, more particularly, to toothed wheels used in such engines and to systems for monitoring the speed of their rotational components.

### BACKGROUND

During operation of an aircraft engine, the rotational speed of certain rotating engine components, such as shafts and spools, is measured with a speed sensor. Phonic wheels are often used as part of such rotational speed sensors. Phonic wheels typically include a toothed wheel that rotates with the rotating component. A sensor, located proximate to the teeth of the toothed wheel, detects the passage of the teeth which in turn enables the rotational speed of the toothed wheel, and therefore the rotating comment, to be determined. While existing rotational speed sensors are suitable for their intended purpose, improvements are sought.

### SUMMARY

In an aspect of the present invention, there is accordingly provided a speed sensor for a rotating component in an aircraft engine, the speed sensor comprising: a phonic wheel mounted for rotation with the rotating component about an axis of rotation, the phonic wheel including a disk body having a first axial face, a second axial face axially spaced apart from the first axial face, a radial surface extending axially between the first and second axial faces and extending circumferentially about the axis of rotation, and teeth extending from the radial surface, the teeth being circumferentially spaced apart by circumferential gaps defined between the teeth, and a shroud extending in a circumferential direction about the phonic wheel, the shroud extending radially to obstruct the circumferential gaps defined between the teeth of the phonic wheel on at least one of the first and second axial faces; and a sensor mounted proximate to the phonic wheel, the sensor configured to generate a sensor signal when the teeth of the phonic wheel pass the sensor as the phonic wheel rotates.

The speed sensor as defined above and disclosed herein may also include one or more of the following features, in whole or in part, and in any combination.

In an embodiment of the above, the shroud is annular and extends about a complete circumference of the phonic wheel.

In an embodiment according to any of the previous embodiments, the shroud extends radially from the radial surface of the disk body a distance that is at least 50% and at most 100% of a radial height of the teeth on the phonic wheel.

In an embodiment according to any of the previous embodiments, the shroud includes a first shroud and a second shroud, the first shroud extending from the first axial face and the second shroud extending from the second axial face, wherein the first and second shrouds obstruct axial openings on both sides of the circumferential gaps defined between the teeth of the phonic wheel.

In an embodiment according to any of the previous embodiments, the shroud extends radially a distance corresponding to a radial height of the teeth away from the radial surface of the disk body of the phonic wheel, the shroud thereby fully obstructing the circumferential gaps defined between the teeth.

In an embodiment according to any of the previous embodiments, the shroud is integrally formed with the disk body of the phonic wheel.

In an embodiment according to any of the previous embodiments, the shroud is fastened to the one of the first and second axial faces of the phonic wheel, and extends radially outward therefrom.

In another aspect of the present invention, there is also provided an aircraft engine comprising: an engine shaft operatively connecting a compressor and a turbine; and a speed sensor configured to determine a rotational speed of the engine shaft, the speed sensor including: a toothed wheel mounted for rotation with the engine shaft adjacent a cavity within the aircraft engine, the toothed wheel including a plurality of teeth circumferentially spaced apart about a radial outer perimeter of the tooth wheel, a shroud extending annularly about the tooth wheel at a radial location corresponding to the teeth, the shroud obstructing axial openings of circumferential gaps defined between the teeth; a sensor disposed proximate the toothed wheel, the sensor operable to sense the teeth of the toothed wheel passing and generate a sensor signal; and a controller operatively connected to the sensor via a detection unit configured to generate an output signal indicative of the rotational speed of the toothed wheel in response to the sensor signal received from the sensor.

The aircraft engine as defined above and disclosed herein may also include one or more of the following features, in whole or in part, and in any combination.

In an embodiment of the above, the shroud is located in an axial side of the toothed wheel closest to the cavity.

In an embodiment according to any of the previous embodiments, the toothed wheel includes a disk body having a first axial face and a second axial face spaced apart by a radial outer surface, the teeth extending from the radial outer surface, and the shroud extending radially from at least one of the first axial face and the second axial face.

In an embodiment according to any of the previous embodiments, the shroud includes a first shroud and a second shroud, the first shroud extending from the first axial face and the second shroud extending from the second axial face, wherein the first and second shrouds obstruct the axial openings on both sides of the circumferential gaps defined between the teeth of the toothed wheel.

In an embodiment according to any of the previous embodiments, the shroud extends radially a distance away from the radial outer surface that is at least 50% and at most 100% of a radial height of the teeth away from the radial outer surface.

In an embodiment according to any of the previous embodiments, the shroud extends radially a distance corresponding to a radial height of the teeth on the toothed wheel, the shroud thereby fully obstructing the axial openings of the circumferential gaps between the teeth.

In an embodiment according to any of the previous embodiments, the shroud is integrally formed with a disk body of the toothed wheel.

In an embodiment according to any of the previous embodiments, the shroud is fastened to the at least one of the first axial face and the second axial face.

In another aspect of the present invention, there is further provided a method of reducing torque on an engine shaft rotating in an aircraft engine, the engine shaft having a toothed wheel mounted thereon, the method comprising: obstructing circumferential gaps defined between circumferentially spaced apart teeth of the toothed wheel to reduce windage during rotation of the toothed wheel.

The method as defined above and disclosed herein may also include one or more of the following steps and/or features, in whole or in part, and in any combination.

In an embodiment of the above, the obstructing includes using a shroud mounted on at least one of first and second axial faces of the toothed wheel, the shroud extending radially to obstruct axial openings of the circumferential gaps.

In an embodiment according to any of the previous embodiments, the method further includes increasing the obstruction of the circumferential gaps by increasing a size and/or a number of shrouds mounted to the toothed wheel proximate to the teeth.

In an embodiment according to any of the previous embodiments, the obstructing further includes providing asymmetric obstruction of the circumferential gaps, by providing greater obstruction on one axial side of the toothed wheel than on the opposite axial side of the toothed wheel.

In an embodiment according to any of the previous embodiments, the toothed wheel is a phonic wheel of a rotational speed sensor, the method further comprising using the speed sensor to determine a rotational speed of the engine shaft.

In another aspect of the present invention, there is also alternately provided a speed sensor for determining a rotational speed of a rotating component in an aircraft engine that includes a toothed wheel, used for example in a fluid system or as part of a speed sensor in an aircraft engine, wherein the toothed wheel includes a shroud on one or both axial side thereof, the shroud extending annularly about the toothed wheel at a radial location corresponding to the outer teeth of the toothed wheel. The shroud at least partially, or completely, the circumferential gaps defined between the teeth of the toothed wheel, such as to reduce "windage" during rotation of the toothed wheel.

In another aspect of the present invention, there is also alternately provided a phonic wheel for a rotational speed sensor system in an aircraft engine, the phonic wheel comprising: a disk body configured to rotate about a rotation axis, the disk body defining a first axial face and a second axial face; a plurality of teeth circumferentially spaced apart about a peripheral edge of the disk body, the teeth extending radially from the peripheral edge and extending axially between the first axial face and the second axial face; and a shroud extending radially outward from at least the first axial face of the disk body adjacent the teeth, the shroud extending annularly about the phonic wheel to obstruct circumferential gaps defined between the teeth.

### BRIEF DESCRIPTION OF THE DRAWINGS

Reference is now made to the accompanying figures in which:
Fig. 1 is a schematic cross sectional view of an aircraft engine, which in this exemplary embodiment is a turbofan gas turbine engine;
Fig. 2 is a schematic representation of a speed sensor for measuring a rotational speed of a rotating component of the aircraft engine of Fig. 1;
Fig. 3 is a partial perspective view of a phonic wheel of the speed sensor of Fig. 2;
Fig. 4A is a partial perspective view of a phonic wheel of the speed sensor of Fig. 2;
Fig. 4B is a partial perspective view of a phonic wheel of the speed sensor of Fig. 2;
Figs. 5A-5B are partial perspective views of an alternate embodiment of the phonic wheel of the speed sensor system of Fig. 2;
Fig. 6 is a schematic representation of a controller for use with the speed sensor of the present disclosure; and
Fig. 7 is a flow chart depicting a method of operating the rotational speed sensor and phonic wheel of the present disclosure.

### DETAILED DESCRIPTION

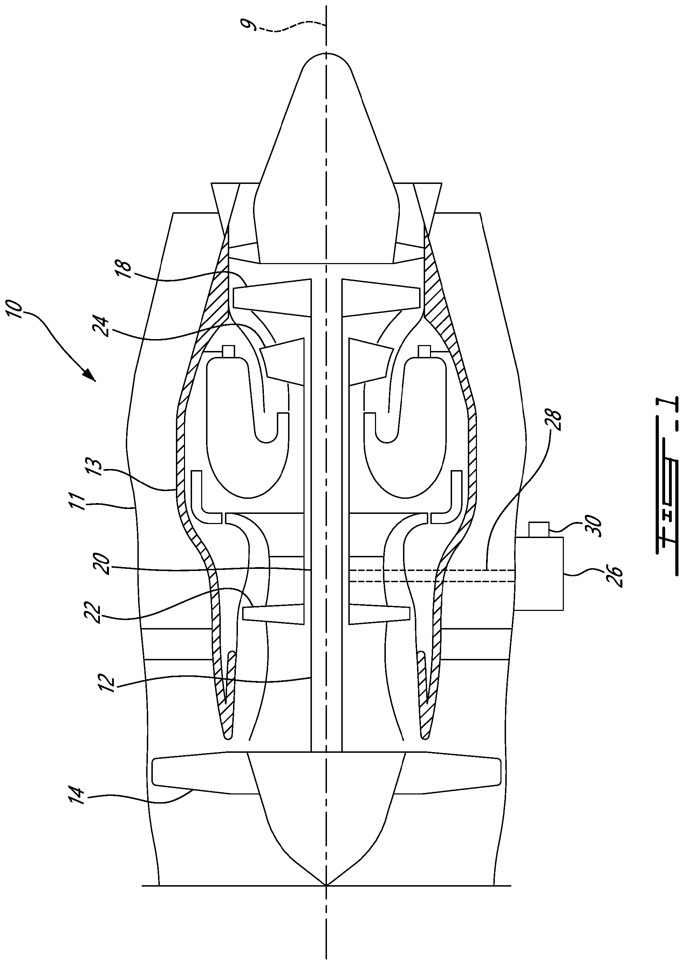

Fig. 1 illustrates an aircraft engine 10 of a type preferably provided for use in subsonic flight. In the depicted embodiment, the aircraft engine 10 is a gas turbine engine, and more particularly a turbofan. The aircraft engine (or simply "engine") 10 includes an outer engine (or bypass) casing 11, a core casing 13, a low pressure spool assembly identified generally at 12 which includes a fan assembly 14 and a low pressure turbine assembly 18 mounted to a common engine shaft (e.g., an LP shaft), and a high pressure spool assembly seen generally at 20 which includes a compressor assembly 22 and a high pressure turbine assembly 24 mounted to a common engine shaft (e.g., an HP shaft). The LP shaft of the low pressure spool 12 and the HP shaft of the high pressure spool 20 may be concentric and thus both rotate about the longitudinal axis 9 of the engine 10. The core casing 13 surrounds the low and high pressure spool assemblies 12 and 20, and define a main fluid path therethrough. An auxiliary gear box (AGB) 26 is attached to the engine case 10 of the engine and is drivingly connected by a tower shaft 28 to the engine shaft of the high pressure spool assembly 20 - such that the speed reduction gears of the AGB 26 rotate at a fixed ratio with respect to the rotational speed of the engine shaft of the high pressure spool assembly 20. The AGB 26 further includes a plurality of accessories such as an oil gear pump 30, a generator, etc. which are affixed to the AGB 26 and are driven by the AGB 26 such that these accessories also rotate in a fixed ratio with respect to the rotational speed of the shaft of the high pressure spool assembly 20. A starter is also conventionally affixed to the gearbox and is drivingly connected to the shaft of the high pressure spool assembly 20 through the tower shaft 28.

During operation of the engine 10, it may be desirable to measure the rotational speed of any one or more of the rotational components of the engine 10, including for example the main engine shafts of the low pressure and high pressure spools 12, 20, the tower shaft 28, etc.

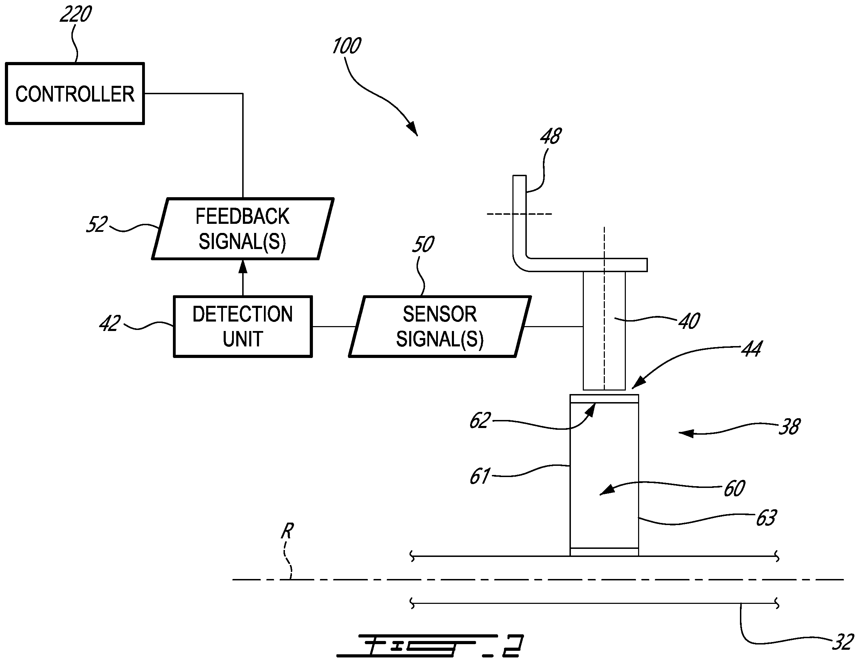

The engine 10 accordingly includes a rotational speed measurement system 100 as will now be described, with reference to Fig. 2. The rotational speed measurement system 100 may also be referred to herein simply as a "speed sensor" or a "speed sensor assembly" 100, which is understood to broadly encompass the entirely of the rotational speed measurement system 100 and its components.

FIG. 2 is a schematic representation of a partial axial cross-section of an exemplary speed sensor 100, which is operable to measure and, in certain embodiments, continuously monitor, the rotational velocity (i.e., rotation speed - or simply "speed" as used herein) of one or more rotating components 32 during operation of the engine 10. In a particular embodiment, the rotating component 32 whose speed is being measured by the speed sensor 100 is, for example, a shaft, such as the main engine shaft of the low pressure spool 12 and/or the main engine shaft of the high pressure spool 20.

The speed sensor 100 may interface with existing mechanical and/or electrical interfaces of other systems within the engine 10, such as engine and other control systems, to provide a digital detection for electronic determination of the rotational speed of the component being measured. It should be noted that although the present disclosure focuses on the use of the speed sensor 100, and the phonic wheel 38 thereof, in a turbofan gas turbine engine, similar techniques can be applied to other types of aircraft engines, including hybrid and electric engines, as well as to other types of engines.

Referring still to Fig. 2, the speed sensor 100 generally includes a phonic wheel 38, a sensor 40 and a detection unit 42 that is in communication with, or alternately forms part of, a controller 220.

The phonic wheel 38 may be located within or adjacent to a cavity of the engine 10, such as a bearing cavity for example. The phonic wheel 38 is configured to rotate about a rotation axis R, which may in some instances be coaxial with the longitudinal axis 9 of the engine 10 and/or with an axis of rotation of the rotating component of the engine for which rotational speed is to be measured. As such, the phonic wheel 38 may be mechanically coupled to the shaft or other rotating component, such that concurrent rotation of the phonic wheel 38 and the rotating component occurs (i.e., such that there is no relative rotation between the phonic wheel 38 and the rotating component being measured). The phonic wheel 38 may thus be configured to rotate at the same rotational speed with the rotating component whose rotational speed is to be measured. However, it is understood that in certain embodiments, the rotation axis R of phonic wheel 38 may not by coaxial with an axis of rotation of the rotating component nor with the longitudinal axis 9 of the engine 10.

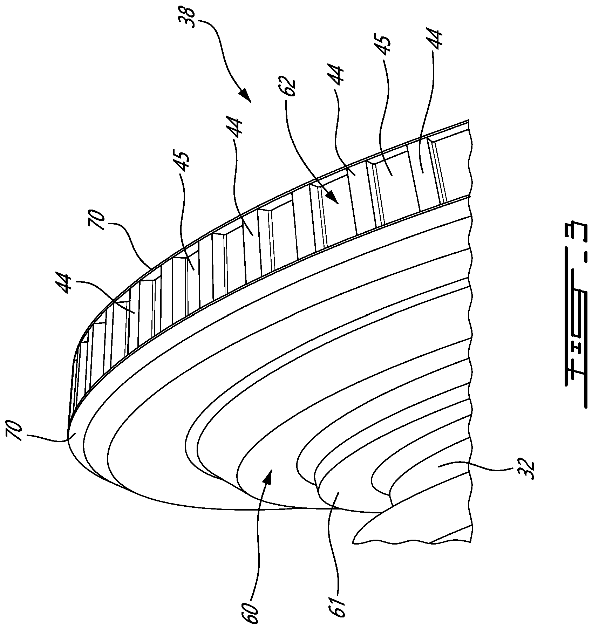

Referring now to Fig. 2 and Fig. 3, the phonic wheel 38 includes generally a disk body 60 having a first axial face 61 and a second axial face 63 that is axially spaced apart from the first axial face 61. In certain embodiments, the first axial face may for example be a front face and the second axial face may be a rear face of the disk body 60. A radial surface 62, which in this embodiment is a radially outer surface, extends axially between the first axial face 61 and the second axial face 63, and extends circumferentially about the axis of rotation R.

In the depicted embodiment, and as seen in Fig. 3, a plurality of circumferentially-spaced apart teeth 44 are disposed on, and extend outward from, the radial outer surface 62 of the phonic wheel 38. The teeth 44 may, in certain embodiments, extend substantially axially between the first and second axial faces 61, 63 and may extend substantially radially away from the radial outer surface 62. However, it is to be understood that they may also be skewed or angled, whereby the teeth 44 are not entirely radial and do not extend fully axially. It is also to be understood that while the phonic wheel 38 includes a plurality of teeth 44, the teeth 44 need not all be identical. Regardless of their exact shape, size and orientation, the teeth 44 are used by the speed sensor 100 for determining the rotational speed phonic wheel 38 as it rotates.

In the depicted embodiment, radial surface 62 is a radially outer surface of the disk body 60. However, in an alternate embodiment, the disk body 60 may be annular and define an exposed radially inner surface. In this embodiment, the radial surface 62 is a radially inner surface of the phonic wheel 38, whereby the teeth 44 will be disposed on the radially inner surface and will extend radially inwardly from this radially inner surface (e.g., towards the axis of rotation R, instead of away from the axis of rotation).

As will be described further below, the teeth 44 on the phonic wheel 38 are positioned and configured such that a passage of teeth 44 is detected by the sensor 40, as phonic wheel 38 rotates about its rotation axis R. In various embodiments, the teeth 44 may all be of the same geometric configuration or may alternately comprise teeth of different geometric configurations. In the depicted embodiment the teeth 44 are substantially equally and evenly circumferentially spaced apart on the phonic wheel 38, and therefore the circumferential gaps 45 defined between teeth 44 are also substantially equally spaced apart. However, in alternate embodiments the teeth 44 may be alternately configured. For example, the teeth 44 may be distributed about the phonic wheel 38 is sets or groups, whereby the spacing between teeth or groups of teeth may be non-constant. In the depicted embodiment, the teeth 44 are integrally formed with the disk body 60, whereby at least the teeth 44 and the disk body 60 of the phonic wheel 38 are monolithic. However, in certain embodiments, one or more of the teeth 44 may be separate components secured to the annular disk body 60 of the phonic wheel 38.

As noted above, the speed sensor assembly 100 includes at least one sensor 40 that is mounted proximate to the phonic wheel in a position and/or orientation suitable for the sensor to be able to detect the passage of the teeth 44 on the phonic wheel 38, when the phonic wheel 38 rotates. It is to be understood that the sensor 40 is mounted such that the shroud(s) 70 as described herein do not interfere with the ability of the sensor 40 to detecting the passing of the teeth 44 as the phonic wheel 38 rotates. The sensor 40 may be an inductive (e.g., proximity) sensor suitable for non-contact detection of the passage of teeth 44 as phonic wheel 38 rotates about its rotation axis R. The sensor 40 may be mounted adjacent phonic wheel 38 and secured to a suitable stationary structure of the engine 10, for example via bracket 48 or with any other suitable means. In some embodiments, the sensor 40 may be a variable reluctance sensor (commonly called a VR sensor) suitable for detecting the proximity of (e.g., ferrous) teeth 44 of the phonic wheel 38. Accordingly, the teeth 44 may be configured to intersect a magnetic field generated by sensor 40 and cause a detectable variation in (e.g., disrupt) the magnetic field. For example, the passage of one or more of the teeth 44 may cause a change in magnetic permeability within the magnetic field generated by sensor 40 and may consequently cause a detectable variation in the magnetic field. In various embodiments, teeth 44 may comprise ferrous or other metallic material(s).

The sensor 40 is thus operable to produce one or more sensor signals 50 which are transmitted to the detection unit 42. Although exemplary embodiment of the sensor 40 may detect changes in magnetic flux due to the presence of the rotating teeth 44 of the phonic wheel 38 in a sensing zone of the sensor 40, it should be understood that other types of sensors can be used. For instance, the sensor 40 can also be an optical sensor which detects reflectivity of light off of position markers (e.g., the teeth 44 themselves, or markers located on the teeth) can be used. In another example, an acoustic sensor which performs detection of position markers (e.g., the teeth themselves, or markers located on the teeth) using echoed sound waves can be used. Still other embodiments are considered.

As shown in Fig. 2, the sensor 40 is in communication with a detection unit 42. The detection unit 42 may be in communication with a controller 220, or alternately the detection unit 42 may itself form part of the controller 220. In the embodiment shown, the detection unit 42 is operatively connected to the sensor 40 for receiving the one or more sensor signals 50 and is configured to generate one or more feedback signals 52 indicative of rotational speed of the phonic wheel 38. The detection unit 42, and by extension the controller 220, may form part of a larger Full Authority Digital Engine Control (FADEC) system of the engine 10 which may, for example, comprise one or more digital computer(s) or other data processors, sometimes referred to as electronic engine controller(s) (EEC) and related accessories that control at least some aspects of performance of engine 10. Accordingly, detection unit 42 may comprise one or more computing devices including, but not limited to, a digital computer, a processor (e.g. a microprocessor), and a memory. In some embodiments, sensor signal(s) 50 may also be used to provide feedback on the rotational speed of the rotating component. Accordingly, detection unit 42 may, in some embodiments be configured to generate feedback signal(s) 52 indicative of the rotational speed of the rotating component.

In certain engines and/or in certain configurations, for example if the diameter of the shaft on which the phonic wheel 38 is mounted, the diameter of the phonic wheel 38 itself, and/or its rotation speed is sufficiently large, the presence of the teeth 44 on the phonic wheel 38 has been found to significantly increase the "windage". Windage is the air resistance of a moving object, such as a rotating part, or alternately the force of wind on a stationary object. Although the phonic wheel 38 may be present within or adjacent to a partially or fully enclosed cavity of the engine 10, any air, gas and/or gas/liquid mix (e.g., an air-oil mixture) to which the rotating phonic wheel 38 is exposed during operation can cause an increased resistance on the rotating phonic wheel 38, which is undesirable. This may lead, in certain instances, to increased torque on the shaft and heat generation in the cavity within which the phonic wheel 38 is located.

Furthermore, if the cavity of the engine 10 within which the phonic wheel 38 rotates is fluidly connected to a gearbox or other source of oil mist, the increased windage caused by such an air-oil mist mix can potentially lead to a false positive feedback resulting from oil colleting within the cavity adjacent to the wheel.

In order to reduce the effects of windage on the rotating phonic wheel 38, the phonic wheel 38 of the present speed sensor 100 includes one or more shrouds 70, as will be described in further detail below, which obstruct the circumferential gaps 45 that are defined between the circumferentially spaced-apart teeth 44 on the phonic wheel 38.

The phonic wheel 38 includes at least one shroud 70 that is disposed on an axial side of the phonic wheel and which extends in a circumferential direction about the phonic wheel. In Fig. 3, the phonic wheel 38 includes two shrouds 70, one on either of its axial faces. However, it is to be understood that the phonic wheel 38 may include only one shroud 70, located on either the first axial face 61 or on the second axial face 63 of the disk body 60 of the phonic wheel. In other words, at least one axial side of the phonic wheel 38 includes a shroud 70 as described herein. Depending upon the geometry of the phonic wheel, the engine configuration and/or the location of the phonic wheel, the teeth 44 of the phonic wheel 38 may preferentially try to draw fluid flow from one particular side of the wheel. For example, if the phonic wheel 38 is mounted adjacent to a cavity, then the side of the phonic wheel 38 closest to the cavity will be most prone to drawing fluid into the teeth of the wheel. Consequently, in such a set-up, the shroud 70 is provided on the side of the phonic wheel 38 that is closest to the cavity, thereby obstructing this flow. In other words, it is advantageous to place the shroud 70 only on the side of the phonic wheel 38 from which fluid is naturally drawn - e.g., the side closes to the cavity.

In the depicted embodiment, the shroud 70 is annular and thus extends about a complete circumference of the phonic wheel 38, however in alternate embodiments the shroud 70 may be discontinuous and thus may not be fully annular. In all cases, however the shroud 70, or shrouds 70, are positioned and configured such as to obstruct at least some, if not all, of the circumferential gaps 45 defined between the teeth 44 on the phonic wheel 38. More particularly, and as shown in Fig. 3, a shroud 70 is located on each of the two axial faces 61, 63 of the phonic wheel 38, and extends radially outwardly such to obstruct the axially facing openings to the circumferential gaps 45 between the teeth 44 of the phonic wheel 38. The shrouds 70 are thus located at a radial location such that the shrouds 70 at least partially radially, if not fully, overlap the teeth 44. In a particular embodiment, the shroud 70 extends radially from the radial surface 62 of the disk body 60 a distance that is at least 50% and at most 100% of a radial height of the teeth 44 on the phonic wheel 38. The shrouds 70 (located on both sides of the phonic wheel 38 in the embodiment of Fig. 3), thus limit the ability of air from being able to flow axially into and/or out of the circumferential gaps 45 defined between the teeth 44 of the phonic wheel 38, as the phonic wheel 38 rotates.

The term "obstruct" as used herein, in the context of the shrouds 70 obstructing the circumferential gaps 45 defined between the plurality of teeth 44 of the phonic wheel 38, is understood to mean that the axial openings to these circumferential gaps 45 are at least partially blocked or covered (but not necessarily fully blocked or covered). For example, the shroud 70 may extend radially along only a partial height of the teeth 44. The axial openings of the circumferential gaps between the teeth would still be said to be obstructed, albeit only partially. In the embodiment depicted in Fig. 3, however, the shrouds 70 extend a radial distance substantially corresponding to the full height of the teeth 44, such that the teeth 44 are substantially fully covered (on their axial sides) by the shroud 70 and consequently the teeth 44 do not protrude radially beyond the shroud 70.

The shroud 70 or shrouds 70 of the phonic wheel 38 help(s) to prevent or limit fluid entering or exiting axially into the circumferential gaps 45 between the teeth 44. By shrouding the teeth 44 of the sonic wheel 38 in this manner, the amount of fluid flow drawn into the teeth is minimized and as a result the magnitude of the fluid flow induced in the adjacent cavity is reduced.

In traditional, un-shrouded, toothed wheels, as the wheel rotates the surrounding fluid tends to be drawn axially between the teeth and expelled radially outward, leading to a large recirculating flow being generated within the cavity adjacent the wheel. By shrouding the teeth 44 using the shroud(s) 70, the present phonic wheel 38 reduces the amount of flow drawn into the teeth 44 as the wheel rotates, and as a result reduces the magnitude of the flow induced in the adjacent cavity. In certain embodiments, the shrouds 70 on the phonic wheel 38 may reduce windage forces by greater than 50% in comparison with an otherwise similar, but un-shrouded, phonic wheel. Additionally, at sufficiently large rotational speeds, the windage on any toothed wheel is due largely to work done on the fluid as it is drawn axially in through the teeth and expelled radially outwards. The windage due to a toothed wheel can be 5-1 0x larger than the same wheel without teeth, and in some instances >80% of the torque on the wheel is due to the presence of the teeth and the windage effect. The shroud or shrouds 70 of the present phonic wheel 38 can significantly reduce these negative effects caused by windage.

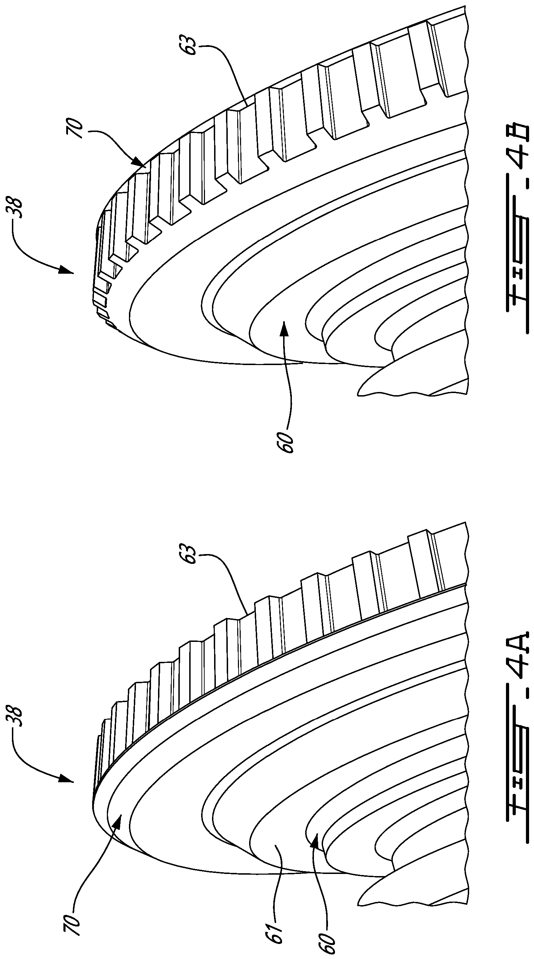

The shrouds 70 of the phonic wheel 38 may be integrally formed with the disk body 60, wherein the shroud or shrouds 70 and the disk body 60 of the phonic wheel 38 are monolithic (e.g., machined or otherwise formed of a single piece). This is the case, for example, of the embodiments of Figs. 3, 4A and 4B.

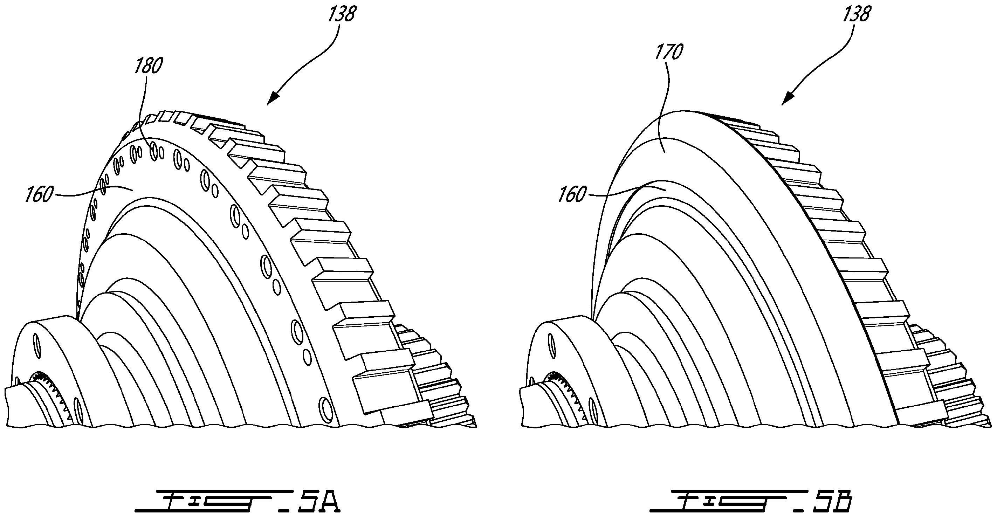

In an alternate embodiment, such as that depicted in Figs. 5A-5B, the shroud 170 and the disk body 160 of the phonic wheel 138 are separate components, or separately formed. In the embodiment of Figs. 5A-5B, therefore, the shroud 170 is an annular ring that is formed separately from the disk body 160 and that is secured thereto using suitable fasteners (not visible in Fig. 5B), which may include but are not limited to, mechanical fasteners such as bolts. Alternately, other fastenings means (including but not limited to, welding, brazing, and the like) may be used to secure the shroud 170 to the disk body 160 of the phonic wheel 138. In Fig. 5A, a number of holes 180 in an outer periphery of the disk body 160, such as to receive the bolts or other fasteners used to secure the shroud 170 to the disk body 160 of the phonic wheel 138.

As noted above, the phonic wheel 38 as shown in Fig. 3 includes two shrouds, wherein both axial sides of the phonic wheel 38 are shrouded. However, as shown in Fig. 4A and Fig. 4B, only one of the two axial sides of the phonic wheel 38 can include a shroud 70. In Fig. 4A, for example, the phonic wheel 38 includes a shroud 70 located only on the first axial face 61 of the disk body 60, whereas the oppose second axial face 63 is free of any shrouds. Alternately, in Fig. 4B the phonic wheel 38 includes a shroud 70 located only on the second axial face 63 of the disk body 60, with the opposite first axial face 61 being free of any shrouds. It is to be understood that the phonic wheel 38 may include, in some instances, only one shroud 70 that is located on either the first axial face 61 or on the second axial face 63 of the disk body 60 of the phonic wheel. In other words, at least one axial side of the phonic wheel 38 includes a shroud 70 but in some cases both axial sides of the phonic wheel 38 are shrouded (such as in Fig. 3).

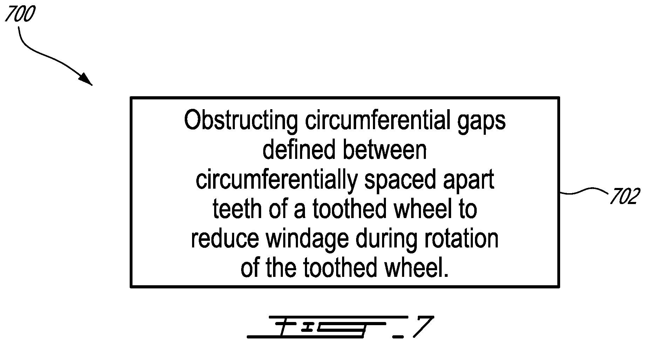

Referring now to Fig. 7, a method 700 of reducing torque on an engine shaft rotating in an aircraft engine 10, the engine shaft having a toothed wheel mounted thereon includes generally, at step 702, obstructing circumferential gaps defined between circumferentially spaced apart teeth of the toothed wheel to reduce windage during rotation of the toothed wheel. The method may also include reducing windage during rotation of the phonic wheel 38 by obstructing circumferential gaps 45 defined between the circumferentially spaced apart teeth 44 of the phonic wheel 38. The obstructing of the circumferential gaps 45 includes, in certain embodiments, using a shroud mounted to the phonic wheel.

In certain embodiments, the method may further include increasing the obstruction of the circumferential gaps by increasing the size (e.g., radial, circumferential or both) of the shroud and/or by increasing the number of shrouds (e.g., by providing shrouds on both axial faces of the toothed wheel). Further, in certain embodiments the toothed wheel may be a phonic wheel 38 of a rotational speed sensor of the engine 10, and the method includes using the speed sensor to determine a rotational speed of the engine shaft. Additionally, the method may include provide asymmetric obstruction, by providing greater obstruction on one axial side of the toothed wheel than on the opposite axial side of the toothed wheel.

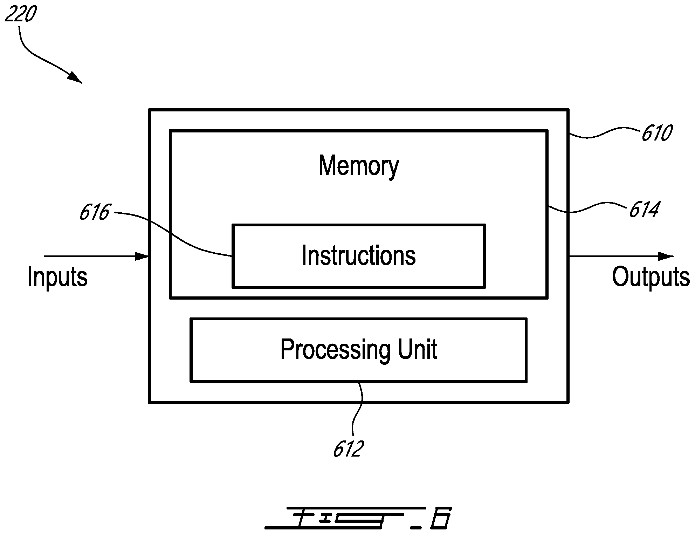

With reference to Figure 6, the method 700 may be implemented using a computing device 610 of the controller 220, comprising a processing unit 612 and a memory 614 which has stored therein computer-executable instructions 616. The controller 220 (see Fig. 2) of the speed sensor 100 may be embodied as, and implemented with, the computing device 610. For simplicity only one computing device 610 is shown but the system may include more computing devices 610 operable to exchange data. The computing devices 610 may be the same or different types of devices.

The processing unit 612 may comprise any suitable devices configured to implement the method 700 and to operate the speed sensor 100 such that instructions 616, when executed by the computing device 610 or other programmable apparatus, may cause the functions/acts/steps performed as part of the method 700 as described herein to be executed and to operate the controller 220.

The processing unit 612 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 614 may comprise any suitable known or other machine-readable storage medium. The memory 614 may comprise non-transitory computer readable storage medium, for example, but not limited to, an electronic, magnetic, optical, electromagnetic, infrared, or semiconductor system, apparatus, or device, or any suitable combination of the foregoing. The memory 614 may include a suitable combination of any type of computer memory that is located either internally or externally to device, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 614 may comprise any storage means (e.g., devices) suitable for retrievably storing machine-readable instructions 616 executable by processing unit 612.

The computing device 610 may be implemented as part of a full-authority digital engine control system (FADEC) or other similar device, including electronic engine control (EEC), engine control unit (EUC), and the like. In some embodiments, the controller 220 is implemented as a Flight Data Acquisition Storage and Transmission system, such as a FAST^{™} system. The controller 220 may be implemented in part in the FAST^{™} system and in part in the EEC. Other embodiments may also apply.

In addition, it should be noted that the method 700 and, more generally, the techniques described herein can be performed substantially in real-time, during operation of the engine 10. For example, if the engine 10 is used as part of an aircraft, the monitoring of the engine 10 using the speed sensor 100 can be performed in real-time during a flight mission. The results of the monitoring can be reported to the operator and adjustments to the operational parameters of the engine 10 can also be performed in real-time.

The phonic wheel and related systems and methods described herein may be implemented in a high level procedural or object oriented programming or scripting language, or a combination thereof, to communicate with or assist in the operation of a computer system, for example the computing device 610. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit 612 of the computing device 610, to operate in a specific and predefined manner to perform the functions described herein, for example those described in the method 700, and to operate the speed sensor 100.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

Various aspects of the speed sensor, phonic wheel and related systems and methods described herein may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be apparent to those skilled in the art that changes and modifications may be made without departing from this invention in its broader aspects. The scope of the following claims should not be limited by the embodiments set forth in the examples, but should be given the broadest reasonable interpretation consistent with the description as a whole.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described herein. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element (e.g., "a speed sensor") is intended to encompass "one or more" such elements, and similarly the use of the definite article "the" in reference to a particular element is not intended to exclude the possibility that multiple of such elements may be present.

The embodiments described in this document accordingly provide non-limiting examples of possible implementations of the present technology. Upon review of the present disclosure, a person of ordinary skill in the art will recognize that changes may be made to the embodiments described herein without departing from the scope of the present technology. For example, although the description above focuses on embodiments where the toothed wheel is a phonic wheel, it is to be understood that the shroud(s) as described herein may be similarly applied to other toothed wheels with aircraft engines 10, such a gears within a gearbox of the engine 10. For example, providing that the shrouds are positioned on a gear so as not to interfere with the meshing of the gear's teeth with the adjacent gear, the gear may be provided with one or more shrouds 70 as described herein, such as to reduce windage during rotation of the gear. This may reduce heat generated in the gearbox, for example. Yet further modifications could be implemented by a person of ordinary skill in the art in view of the present disclosure, which modifications would be within the scope of the present technology.

## Claims

1. A speed sensor (100) for a rotating component (32) in an aircraft engine (10), the speed sensor (100) comprising:
a phonic wheel (38; 138) mounted for rotation with the rotating component (32) about an axis of rotation (R), the phonic wheel (38; 138) including a disk body (60; 160) having a first axial face (61), a second axial face (63) axially spaced apart from the first axial face (61), a radial surface (62) extending axially between the first and second axial faces (61, 63) and extending circumferentially about the axis of rotation (R), and teeth (44) extending from the radial surface (62), the teeth (44) being circumferentially spaced apart by circumferential gaps (45) defined between the teeth (44), and a shroud (70; 170) extending in a circumferential direction about the phonic wheel (38; 138), the shroud (70; 170) extending radially to obstruct the circumferential gaps (45) defined between the teeth (44) of the phonic wheel (38; 138) on at least one of the first and second axial faces (61, 63); and
a sensor (40) mounted proximate to the phonic wheel (38; 138), the sensor (40) configured to generate a sensor signal (50) when the teeth (44) of the phonic wheel (38; 138) pass the sensor (40) as the phonic wheel (38; 138) rotates.

2. The speed sensor (100) as defined in claim 1, wherein the shroud (70; 170) is annular and extends about a complete circumference of the phonic wheel (38; 138).

3. The speed sensor (100) as defined in any of the preceding claims, wherein the shroud (70; 170) extends radially from the radial surface (62) of the disk body (60; 160) a distance that is at least 50% and at most 100% of a radial height of the teeth (44) on the phonic wheel (38; 138).

4. The speed sensor (100) as defined in any of the preceding claims, wherein the shroud (70) includes a first shroud (70) and a second shroud (70), the first shroud (70) extending from the first axial face (61) and the second shroud (70) extending from the second axial face (63), wherein the first and second shrouds (70) obstruct axial openings on both sides of the circumferential gaps (45) defined between the teeth (44) of the phonic wheel (38).

5. The speed sensor (100) as defined in any of the preceding claims, wherein the shroud (70; 170) extends radially a distance corresponding to a radial height of the teeth (44) away from the radial surface (62) of the disk body (60; 160) of the phonic wheel (38; 138), the shroud (70; 170) thereby fully obstructing the circumferential gaps (45) defined between the teeth (44).

6. The speed sensor (100) as defined in any of the preceding claims, wherein the shroud (70; 170) is integrally formed with the disk body (60; 160) of the phonic wheel (38; 138).

7. The speed sensor (100) as defined in any of the preceding claims, wherein the shroud (70; 170) is fastened to the one of the first and second axial faces (61, 63) of the phonic wheel (38; 138), and extends radially outward therefrom.

8. An aircraft engine (10) comprising:
an engine shaft (32) operatively connecting a compressor (22) and a turbine (24);
the speed sensor (100) as defined in any of the preceding claims, the speed sensor (100) configured to determine a rotational speed of the engine shaft (32); and
a controller (220) operatively connected to the speed sensor (100) via a detection unit (42) configured to generate an output signal (52) indicative of the rotational speed of the toothed wheel (38; 138) in response to the sensor signal (50) received from the sensor (40).

9. A method of reducing torque on an engine shaft (32) rotating in an aircraft engine (10), the engine shaft (32) having a toothed wheel (38; 138) mounted thereon, the method comprising:
obstructing circumferential gaps (45) defined between circumferentially spaced apart teeth (44) of the toothed wheel (38; 138) to reduce windage during rotation of the toothed wheel (38; 138).

10. The method of claim 9, wherein the obstructing includes using a shroud (70; 170) mounted on at least one of first and second axial faces (61, 63) of the toothed wheel (38; 138), the shroud (70; 170) extending radially to obstruct axial openings of the circumferential gaps (45).

11. The method of claim 9 or 10, further comprising increasing the obstruction of the circumferential gaps (45) by increasing a size and/or a number of shrouds (70; 170) mounted to the toothed wheel (38; 138) proximate to the teeth (44).

12. The method of any of claims 9 to 11, wherein the obstructing further includes providing asymmetric obstruction of the circumferential gaps (45), by providing greater obstruction on one axial side of the toothed wheel (38; 138) than on the opposite axial side of the toothed wheel (38; 138).

13. The method of any of claims 9 to 12, wherein the toothed wheel is a phonic wheel (38; 138) of a rotational speed sensor (100), the method further comprising using the speed sensor (100) to determine a rotational speed of the engine shaft (32).
